Europäisches Patentamt

European Patent Office

Office européen des brevets

(19)

(11) **EP 1 216 131 B1**

(12) **EUROPEAN PATENT SPECIFICATION**

(45) Date of publication and mention
of the grant of the patent:
**13.08.2003 Bulletin 2003/33**

(21) Application number: **00940361.9**

(22) Date of filing: **13.06.2000**

(51) Int Cl.⁷: **B29C 44/46**, B29C 44/34

(86) International application number:
**PCT/EP00/05387**

(87) International publication number:
**WO 01/010623 (15.02.2001 Gazette 2001/07)**

(54) **PROCESS AND DEVICE FOR DISPENSING POLYURETHANE FOAMING MATERIAL**

VORRICHTUNG UND VERFAHREN ZUR AUSGABE VON POLYURETHANSCHAUMMATERIAL

PROCEDE ET DISPOSITIF DE DISTRIBUTION D'UN MATERIAU EXPANSIBLE DE POLYURETHANE

(84) Designated Contracting States:
**DE GB IT**

(30) Priority: **09.08.1999 IT MI991795**

(43) Date of publication of application:
**26.06.2002 Bulletin 2002/26**

(73) Proprietor: **Worldwide Polyurethanes B.V.
1075 Amsterdam (NL)**

(72) Inventor: **FIORENTINI, Carlo
I-21047 Saronno (IT)**

(74) Representative: **Coloberti, Luigi
Via E. de Amicis No. 25
20123 Milano (IT)**

(56) References cited:
**EP-A- 0 786 321          WO-A-97/02938
US-A- 5 833 930          US-A- 5 883 143**

**Description**

<u>BACKGROUND TO THE INVENTION</u>

The present invention relates to the production of polyurethane foams either of flexible or rigid type from a chemically reactive liquid mixture comprising a polyol and an isocyanate, which are pre-expanded or frothed by an inert low boiling blowing agent highly soluble under pressure in the polyurethane forming mixture, such as carbon dioxide ($CO_2$).

More particularly the invention relates to a process according to the preamble of claim 1 and to a device according to the preamble of claim 11 for dispensing a polyurethane foaming material in the continuous production of polyurethane foam slab stocks.

Such a process and device are known e.g. from EP-A-0 645 226.

In the production of polyurethane foams, both of the flexible and rigid type, various methods and devices have been proposed, including the use of the known "frothing" or pre-expansion technology, whereby a low-boiling nonreactive blowing agent, in particular carbon dioxide ($CO_2$), is dissolved under pressure in the polyurethane forming mixture hereinafter also referred to as polyurethane mixture, or in one of its chemical components, at a pressure equal to or higher the equilibrium pressure, for example at a pressure ranging between 5 and 20 Atm to maintain the $CO_2$ dissolved in the liquid mixture until feeding to a dispensing device where frothing take place.

The use of carbon dioxide added to the chemical formulation, as a blowing agent in the production of polyurethane foams, has for a long time been proposed in numerous prior documents, for example in US-A-3.184.419 (MERRIMAN) of 1965 and EP-A-089796 (ICI) of 1982, and suggested in order to avoid certain problems of an environmental and economic nature which occurred with conventional blowing agents, such as fluorocarbons or chlorofluorocarbons, however this previous suggestions failed to provide a process and a dispensing device suitable for industrial scale applications.

In the production of polyurethane foams pre-expanded by $CO_2$, technical problems also arose which were found to be difficult to solve. In particular, during the dispensing or laying down of the mixture, it was difficult to achieve an adequate control in the reducing of the pressure, and a gradual release of the $CO_2$ in the frothing polyurethane mixture. The foam generally had numerous defects, such as cavities or large holes, and an irregular cellular structure which made the foam produced unacceptable from the commercial viewpoint.

In order tc find an industrially effective solution to this awkward problem, EP-A 0 645 226 proposed a special dispensing device whereby it is possible to distribute, in a controlled manner, a frothing polyurethane mixture, while it is distributed on a substrate; US-A-5.833.930, EP-A-0.786.321 also are representative of foam dispensing devices.

In particular, in EP-A-0 645 226 the use of a lay down device for dispensing a foaming polyurethane material, has been proposed for dispensing a liquid polyurethane mixture containing a certain percentage of carbon dioxide ($CO_2$) and nucleation gas, in which the $CO_2$ has previously been dissolved under pressure in one of the chemical components, or in the same mixture, at a critical pressure for example between 5 and 20 bar, sufficient for maintaining the carbon dioxide dissolved in the liquid mixture allowing to initiate frothing under pressure controlled conditions to avoid turbulent evaporisation of $CO_2$ upon discharge of the same mixture from pressure drop-zone.

This device substantially comprises a pressure equalising chamber and a pressure drop zone which opens towards a frothing cavity. The pressure drop zone is defined by an elongated slot of restricted height, provided by smooth walls which extend in the flow direction of the mixture, or by a plurality of holes. By means of a such pressure drop zone, it is possible to achieve a gradual pressure reduction in the laminar flow of the liquid mixture and a controlled release of the $CO_2$ in gaseous form downstream the outlet of the pressure drop slot in an enlarged frothing cavity provided for distribution of the froth.

Devices of this type have in practice shown to operate in an appropriate manner and allow the production of pre-expanded foams of good quality, having a regular cellular structure, substantially free from large bubbles or cavities.

Nevertheless, in order to achieve a good start of the frothing, it is necessary to introduce into the liquid polyurethane mixture a quantity of non-soluble nucleation gas, for example nitrogen or air in a large amount of 70-90 litres/min., depending on the flow rate, which has to be appropriately dispersed into the liquid mixture to form finely divided gaseous "nuclei" around which the microscopic bubbles of $CO_2$ released into the mixture aggregate, to cause frothing.

The use of nucleation gas nevertheless entails other problems which may be partially solved by a compromise between quantity of nucleation gas dispersed into the polyurethane mixture, and quality or properties of the polyurethane foam.

Furthermore an excess of nucleation gas can lead to an uncontrollable frothing, with violent release of the $CO_2$ into the mixture and consequent formation of an irregular cellular structure. Therefore, in the production of expanded polyurethane foams an excess or lack of nucleation gas may lead to defects in cell formation, i.e. to the formation of an irregular and uneven cell structure with creation of large bubbles and cavities. With traditional process and dispensing devices it is therefore difficult to control, in the time and in the width of the dispensing device, to the correct extent the quantity of nucleation air dispersed in the liquid polyurethane mixture.

There is therefore the need to improve this technology further, at the same time making it suitable for many applications.

OBJECTS OF THE INVENTION

The main object of the present invention is to provide a process and a foam dispensing device for the production of both flexible and rigid polyurethane foams from a polyurethane mixture pre-expanded by means of the frothing technique, such as to avoid the disadvantages of the previously referred devices.

More particularly an object of the present invention is to provide a process for the production of a polyurethane foam by frothing a polyurethane liquid mixture containing carbon dioxide ($CO_2$) as blowing agent, such as to avoid the use or allow a substantial reduction in the content of nucleation gas dispersed in the liquid mixture, in this way avoiding the problems of defective cell formation.

A further object of the present invention is to provide a process as referred to above, which also allows an adequate control of the frothing step and quality of the foam.

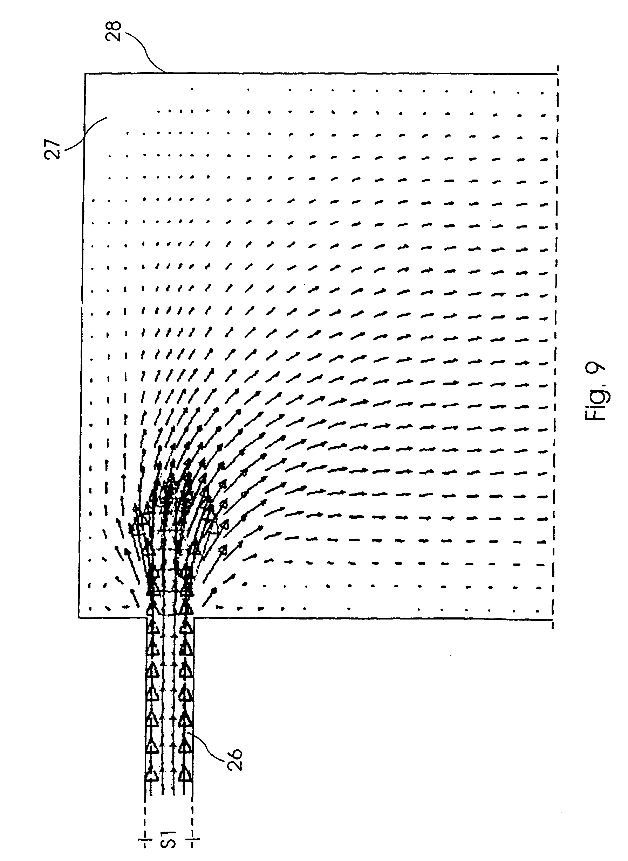

Yet another object of the invention is to provide an apparatus for performing the process referred above, which has a simplified construction, and which allows a control of the nucleation and frothing steps, acting at a microscopic level directly on the fluid threads which flow along an elongated and restricted path or slot of a pressure drop zone, unlike apparatus of the type previously known, where the control takes place within considerably larger dimensions, in a frothing cavity provided at the exit end of the pressure drop zone, as shown for example in the prior EP-A-0 645 226 in which frothing occurs after the kinetic energy of the flow exiting the slot has been almost totally dampened, as shown in Figure 9 of the accompanying drawings.

Lastly, another object of the present invention is to provide a process and a dispensing device for the production of a frothed polyurethane foam, suitable for the continuous manufacture of polyurethane foam slab stocks.

BRIEF DESCRIPTION OF THE INVENTION

According to a first aspect, the present invention provides a process for the production of polyurethane foams as defined in claim 1, namely comprising the steps of:

- mixing at least a first and a second chemically reactive components, such as a polyol and an isocyanate with carbon dioxide ($CO_2$) under critical pressure condition to maintain the carbon dioxide dissolved into the resulting liquid mixture;
- gradually reducing the pressure into the mixture while it is flowing at laminar condition along a first portion of a restricted flow path comprising a pressure-drop slot having side walls longitudinally extending in the flow direction and dimensioned to provide a back-pressure in the upstream mixture sufficient to maintain the carbon dioxide in a dissolved state,

  characterised by the additional step of:

- causing nucleation and frothing of the mixture, by generation of localised turbulences and eddies formation to gradually release gaseous carbon dioxide into the liquid mixture by successive abrupt angular diversions of the mixture while it is flowing along a remaining portion of the restricted flow-path consisting of an extension of the walls of the pressure-drop slot.

According to a preferred embodiment of the above process, the localised turbulency or whirling conditions in the flow of the flowing mixture, close to the exit end of the pressure drop slot, are generated by causing sudden changes in the flow direction of the mixture, around sharpened edges, for example by shaping an end portion of the flow path with one or more successive slots angularly arranged each other, for example with a Z like shape, or by providing a plurality of fine teeth on opposite side walls, to generate one or more repeated flow diversions of the fluid threads and a condition of localised micro vortices or eddies, which in turn generates a diffused nucleation into the liquid mixture, and a gradual release of the gaseous $CO_2$ into the mixture which flows towards the exit of the flow path, to be fed or delivered onto a substrate or in an underlying zone.

According to a second aspect of the present invention, a device as defined in claim 11 for dispensing a frothed polyurethane material, in the production of polyurethane foams, has been provided, the device comprising:

  a distribution chamber (15, 22) for $CO_2$ containing polyurethane foaming mixture, opening into a pressure drop zone comprising a restricted flow path (16, 24) which extends in the direction of the flow, said flow path comprising a first flow portion provided by a pressure drop slot (16A, 24A) having side walls to gradually reduce the pressure in the flowing mixture, characterised in that said restricted flow path (16) comprises a second flow portion (16B; 16D; 16E; 24B) having an exit side and consisting of an extension of the side walls of the pressure-drop slot (16), said second flow portion being conformed to cause nucleation and gradual releasing of $CO_2$ by successive angular diversions in the flowing mixture, upstream said exit side.

According to a preferred embodiment of the above device, the foam dispensing device is in the form of a circular device or of an elongated bar which extends for example in a cross direction of the flowing mixture or a moving substrate on which the frothing polyurethane material is delivered, for example in the continuous production of polyurethane foams slab stocks, or it can assume other different shapes for a different use.

The foam dispensing device preferably comprises a flow distribution chamber which is fed with a pressurised $CO_2$-containing liquid polyurethane mixture, a pressure drop zone in the form of a narrow and elongated slot which extends in the flow direction of the mixture, and which comprises a first axially elongated portion for pressure reduction, and an intermediate short frothing portion for the generation of localised eddies directly in the flow of the mixture, close to the exit of the pressure drop slot.

Further preferred embodiments of the process and of the device are defined in the dependent claims.

BRIEF DESCRIPTION OF THE DRAWINGS

These and further features of the invention, and some embodiments thereof, will be described in greater detail hereinbelow with reference to the accompanying drawings, in which:

- Fig. 1 is a perspective view of part of a system for the continuous production of polyurethane foams, designed to illustrate the process and an embodiment of the device according to the invention;
- Fig. 2 is an enlarged cross sectional view of the device of Figure 1;
- Fig. 3 is a greatly enlarged detail of the exit portion of the device of Figure 2;
- Fig. 4 is an enlarged detail of the exit portion, for a second embodiment of the device of figure 1;
- Fig. 5 is an enlarged detail of the exit portion, for a third embodiment;
- Fig. 6 is a cross sectional view of a further embodiment of the foam dispensing device according to the invention;
- Fig. 7 is an enlarged cross sectional view along line 7-7 of Fig. 6, for a first embodiment of the device of figure 6;
- Fig. 8 is a cross sectional view similar to that of Fig. 7 for a second embodiment of the device of figure 6;
- Fig. 9 shows a simulated flow diagram, for a foam dispensing device of known type;
- Fig. 10 shows a schematic view of a tested embodiment similar to that of figure 4;
- Fig. 11 shows an enlarged detail of figure 10.

DETAILED DESCRIPTION OF THE INVENTION

The invention will now be described in greater detail with reference to the accompanying drawings, in which some preferred embodiments are illustrated.

As referred previously, the process and the device according to the present invention are useful for the production of both flexible and rigid foams, of the open or closed cell type, particularly but not exclusively in the continuous production of foam slab stocks.

A polyurethane foam is typically produced by making various chemically reactive liquid components react, such as a polyol, an organic isocyanate and water, together with an emulsifier, a non-soluble nucleation gas, for example air or nitrogen, a catalyst and a blowing agent, the rigid or flexible nature of the foam depending in general on the formulation of the mixture, in a manner in itself known. For the purposes of the present invention, liquid polyurethane components refer to any polyol, any isocyanate (TDI - MDI) or their derivatives, using generally known standard formulations, or specially provided for the production of rigid or flexible polyurethane foams in general.

The present invention starts from the observation, made through several experimental tests, unlike commonly known conventional methods, that it is possible to reduce considerably the content of nucleation gas dispersed in the liquid mixture, and therefore substantially reduce the rising of cell formation defects, at the same time obtaining controlled frothing of the polyurethane mixture, acting directly on the flowing conditions of the mixture before delivery. In particular it has been discovered that the flow conditions can be advantageously modified while the liquid mixture is flowing along a restricted flow path comprising a restricted slot which longitudinally extends in the same flow direction of the mixture, comprising a pressure-drop slot in which the fluid is running at a substantially laminar flow condition, where most of the pressure in the polyurethane mixture is gradually reduced, substantially without any releasing of $CO_2$ gas, which extend into a frothing slot or remaining portion of the restricted flow path, for generation of a localised turbulency or whirling conditions, having an extremely reduced length compared to the pressure-drop slot, comparable to pressure-drop slot, or slightly greater, near the exit for the mixture, in which diffused nucleation takes place through a mechanical or hydraulic effect, as well as a gradual release of the $CO_2$ in gaseous form, to start pre-expansion or generate controlled frothing conditions directly in the flow of the polyurethane mixture while it running along the final portion of the flow path.

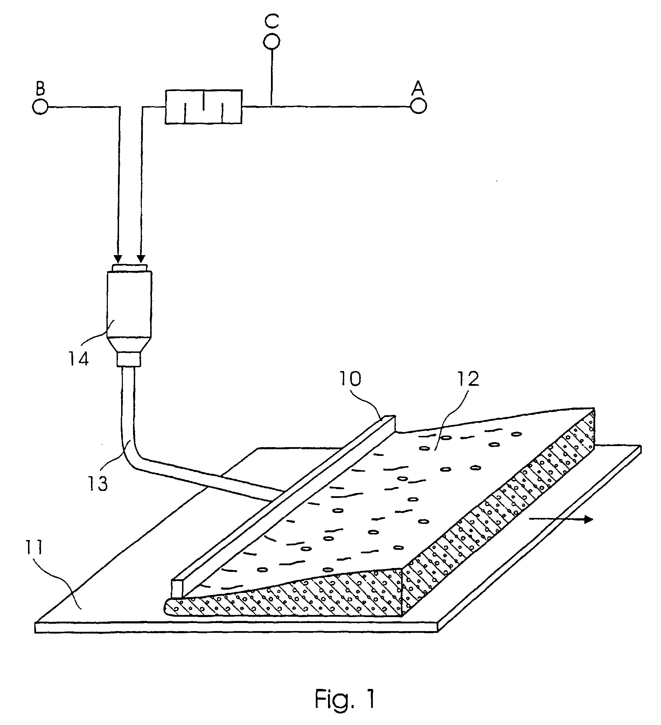

With reference to Figures 1 to 4, the process and a first preferred embodiment of the foam dispensing device according to the invention, will now be described in greater detail.

In Figure 1 a schematic view is given of the basic elements of an apparatus for the continuous production of polyurethane foam slab stocks, in a manner per known, for example as described in the earlier EP-A 0 645 226 filed on 11 July 1994 in the name of the Dutch company FOAMING TECHNOLOGIES CARDIO BV, which forms an integral part of the present description.

Reference 10 denotes a dispensing device for feeding a frothed polyurethane mixture, in the form of a linear bar which extends transversely for part or for the entire width of a mobile substrate 11, whereon the frothed polyurethane mixture 12 is continuously deposited and made to move forwards at a preset speed along a curing zone for the continuous formation of slab stocks of expanded foam.

The foam dispensing device 10, is connected by means of a conduit 13 to a mixer 14, for example of the low pressure type, wherein the polyurethane components A and B to be mixed are fed together with the various additives and a preset percentage of carbon dioxide previously dissolved in one of the two components, or directly fed into the same mixing device.

Owing to the high capacity of the carbon dioxide ($CO_2$) to make a liquid in solution with the chemical components, or with the polyurethane mixture, the content of dissolved $CO_2$, as a percentage of the total mixture, is in general variable compatibly with the required expansion degree for the polyurethane foam and with the required properties of density for the foam.

In general, the amount of $CO_2$ can be between 1% and 10%, or higher, on the total mixture, while its dissolving can be achieved by injecting it directly into the flow of one of the polyurethane components, as for example denoted by C for the component A, premixing it in a static mixer before definitive mixing with the other components, in the mixer 14.

In order to maintain the $CO_2$ dissolved in the polyurethane mixture without the formation of gas, during mixing it is necessary to work at a pressure equal to or preferably higher than a critical pressure depending on the quantity of $CO_2$ in the mixture, for example by operating at a pressure between 5 and 20 bar approximately, according to the percentage of dissolved $CO_2$.

Similarly, the amount of water used as additional blowing agent, for the generation of the chemical carbon dioxide required for completing expansion of the foam, can be between 0% and 5% approximately compared to the weight of the reactive mixture, or it can be higher according to the requirements of use.

Similarly, according to an aspect of the present invention, the quantity of nucleation gas dispersed in the reactive liquid mixture, or in one of the components, can be maintained comparatively low, for example 1/10 or 1/5 less than the nucleation gas normally used with conventional methods, at most zero, reducing in this way the risks and disadvantages linked to possible defects of cell formation into the foam.

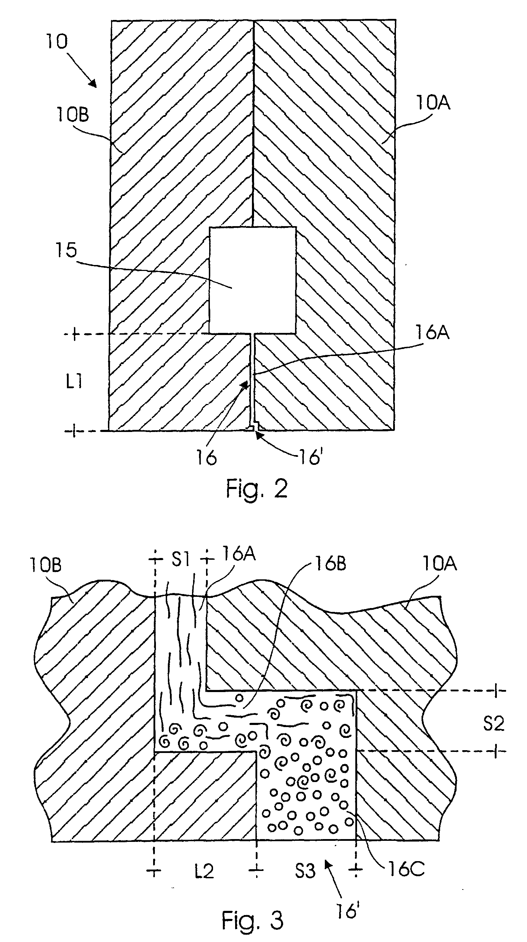

One preferred embodiment of the dispensing device 10, and its mode of operation according to the invention, will be now described in detail with reference to Figures 2 to 4.

As shown in the enlarged section of Figure 2, the dispensing device 10 substantially comprises two side by side arranged bars 10A and 10B, each including a wide longitudinal groove to conjointly define a tubular chamber 15 connected to the conduit 13 (Fig. 1) for feeding the liquid polyurethane mixture from the mixer 14.

The tubular chamber 15 allows for an equalisation of the pressure and distribution of the liquid mixture, which is fed to a restricted flow path 16 comprising a pressure-drop slot defined by side walls strictly closed together, which develop for the entire length of the chamber 15 and extend in the moving direction of the mixture flowing along the flow path 16.

As shown in Figure 2 and in the enlarged detail of Figure 3, the flow path 16, near the exit 16' for the mixture, is provided with a Z-shaped portion, such as to cause localised turbulency conditions by means of one or more abrupt flow diversions of the mixture while it is running along the slot 16, as explained further on.

As shown in Figures 2 and 3, the flow path 10 comprises first rectilinear portion provided by a slot 16A of comparatively long length, defined by flat walls, wherein laminar flow conditions are established such as to cause a gradual reduction of the pressure in the mixture, equal to or higher than 90% of the existing pressure in the chamber 15. In many cases the pressure drop along the slot portion 16A can be close to or only a few percentage lower the entire pressure difference between the chamber 15 and the open end of the exit 16' of the flow path 16.

Purely by way of an indication, in the production of flexible polyurethane foams, the slot 16A, can have a height S between 0.1 and 0.8 mm, preferably between 0.2 and 0.6 mm, while the total length L1 can indicatively be between 1 and 30 mm approximately, for flow rates Q normally running between 50 and 500 l/min. and with viscosity $\rho$ between 100 and 1000 cps. Preferably, in the case of the example referred above, L1 can be between 15 and 25 mm, even if values higher or lower than those specified above are not excluded, according to the pressure to be generated in the chamber 15, or inside the mixer device 14, and according to the output or flow rate and viscosity of the liquid polyurethane mixture.

The final portion 16' of the flow path 16 consisting of an extension of the slot 16A, is shaped in such a way as to cause the generation of turbulency or whirling conditions suitable for starting intense nucleation and a pre-expansion or frothing step by a gradual release of CO2 in gaseous form into the polyurethane mixture while it flows along said final portion 16', as shown in the enlarged detail of Figure 3.

As can be seen from this Figure, the lower end of the first rectilinear portion or slot 16A, wherein the mixture runs with a laminar flow, extends in a second portion 16B, also referred to as intermediate portion having an extremely limited length. The intermediate portion 16B is positioned at an angle of 90° in relation to the slot 16A, so as to generate abrupt local flow diversions and consequently the rising of first localised whirling or eddies in the same flow of mixture, followed by a third portion 16C for exit of the mixture, arranged for example parallel to the slot 16A so as to cause, with the intermediate portion 16B, a second abrupt change in the flow of the mixture, and a second generation of localised turbulency or whirling conditions close to the previous one.

In the case shown, the three portions 16A, 16B and 16C of the path 16 define a Z-shaped flow path in which the contiguous portions of the slot form an angle of 90° one in relation to the other; however the angle can be greater or smaller than 90°, ranging for example between 70° and 120°, with the intermediate portion 16B slanted towards the final portion 16C in an opposite direction in respect to the flow of mixture running in the slot 16A.

As referred previously, the height "S" of the slot can be between 0.1 and 0.8 mm in the portion 16A, preferably between 0.3 and 0.6, and larger in the remaining two portions 16B and 16C. From tests it was noted that, by changing the height S and length of the portions 16A, 16B and 16C of the slot, more generally their reciprocal arrangement and configuration, it is possible to provide a positive influence on the flow state of the mixture and change the properties of the pre-expanded polyurethane mixture at the exit of the dispensing device, in particular the degree of nucleation and the frothing of the same mixture, as well as the properties of the final foamed material.

As a general rule, for the example of figures 2 and 3, the three portions 16A, 16B and 16C of the flow path 16 can have the same height; however it is preferable for the portions 16B and 16C, in which nucleation and the frothing steps of the mixture take place, whose volume tends to increase considerably in relation to the liquid mixture, to have increasing dimensions of the flow path.

Purely by way of an example, denoting by S1, S2 and S3 the height of the path 16 in the sections 16A, 16B and 16C respectively, and denoting by L1 the total length of the path 16, L2 the space between the longitudinal axes of the slot portions 16A and 16C, in Figure 3, that is to say the minimum space between the two flow diversions; likewise denoting by Q the flow rate and ρ the viscosity of the mixture, at fluidinamic conditions, satisfactory results were obtained when these parameters came within the following ranges:

|  | FLEXIBLE FOAM | RIGID FOAM |
|---|---|---|
| S1 | 0.1 - 0.8 mm | 0.1 - 0.5 mm |
| S2 | 0.2 - 1 mm | 0.1 - 1 mm |
| S3 | 0.3 - 2 mm | 0.2 - 1.5 mm |
| L1 | 1 - 30 mm | 1 - 30 mm |
| L2 | 0.3 - 1.6 mm | 0.3 - 1.6 mm |
| Q | 50 - 500 l/min. | 10 - 50 l/min. |
| ρ | 100 - 1000 cps | 200 - 2000 cps |

In general it is advisable for the space between two successive flow diversions and two successive generation points of localised turbulency, to be such as to prevent the flow from tending to return to a laminar condition, or substantially such.

The general principles of the process according to the invention and the operation of the foam dispensing device shown, are now described in more detail with reference to Figures 2 and 3.

The chemically reactive polyurethane components such as a polyol A and an isocyanate B, in one of which a certain a certain percentage of carbon dioxide has been dissolved, are mixed in the mixing device 14 together with auxiliary components, at a pressure in the mixer 14 sufficient for maintaining the CO2 dissolved in the liquid mixture. The resulting mixture is then fed to the distribution chamber 15 to be distributed along the entire width of dispensing device 10 and onto an underlying substrate 11, in the form of a frothing material.

More specifically, the polyurethane mixture which is fed into the distribution chamber 15 at a critical pressure equal to or higher than the equilibrium pressure of the CO2 dissolved in the liquid mixture, at a working temperature close to the ambient, for example at a temperature ranging between 18 and 30°C, flows along the first portion of the flow path 16 provided by a slot 16A where a gradual reduction in the pressure takes place, maintaining a flow of mixture at a substantially laminar condition.

In the slot 16A no nucleation effect therefore occurs, nor any demixing of the CO2, in that the existing pressure is still high enough to prevent the development of bubbles of gas in the mixture which flows towards the exit side of the flow path 16.

However, near the end of the linear slot portion 16A, where the liquid mixture has a relatively low speed of between 3 and 10 m/sec., calculated on the liquid, i.e. when most of the pressure in the mixture has been approximately reduced by 90-95% of the pressure existing in the distribution chamber 15, due to the greater relative shear between the fluid threads near the walls of the slot, compared to the central part where the shear between fluid threads is considerably less, first micro bubbles generation of gaseous CO2 start to form along the same walls of the slot, which will enable an intense nucleation effect and frothing of the polyurethane mixture to originate in the successive portions 16B and 16C of the flow path.

Starting from this step in which an effect of a differentiate demixing of the gas in the intermediate portion of the slot occurs, a sharp or abrupt change of the flow direction from slot 16A to the intermediate portion 16B is caused, followed by a second sharp or abrupt change of flow direction from the intermediate portion 16B and the final portion 16C.

These sudden changes in direction of the flow create high localised turbulency or whirling which accentuates the demixing of the CO2 gas in the whole flow of the mixture, in that the pressure is now sufficiently low to allow the development of bubbles of gas.

According to the invention therefore, the first portion of path 16 provided by the slot 16A, generates the pressure drop necessary for allowing the transition of the mixture from the pressurised zone of the chamber 15 to the final portions 16B, 16C of the path 16, to stabilise the solubility conditions of the CO2 upstream the dispensing device, maintaining laminar flow conditions. Subsequently, along the final portions 16B, 16C of the path an intense release of micro bubbles of CO2 occurs both along the peripheral walls and in the entire flow of the mixture due to the localised turbulency or whirling conditions generated by the sudden changes in flow direction, and also due to the increased speed of the same mixture while it is frothing and flowing towards the exit.

In practice, in the intermediate portion 16B of the path 16, an intense nucleation effect occurs with formation of micro bubbles of CO2 in the entire flow of the mixture, and an incipient pre-expansion or frothing effect take place, which will increase in the final portion 16C as far as the exit of the path 16.

An analysis was performed on the pressure losses in the slot, along the flow path, calculating the specific kinetic energy Ec in the mixture at each slot portion where the change in the direction of flow occurs.

The specific kinetic energy of the liquid at point of the path where a change in direction occurs, is obtained from the following formula:

$$1) \quad Ec = \int_{o}^{ho} \frac{1}{2} \rho \frac{V(h)2}{ho} \, dh$$

where

ho       is the maximum height of the flow path;

$\rho$       the viscosity; and

V(h)     the speed of the fluid in the corresponding portions of the flow path.

Having indicated by k = 0.3 the coefficient of loss for a change in direction of 90°, the pressure dissipated, and consequently the energy supplied to the mixture at each change in direction, is in turn obtained from the formula:

$$2) \quad \Delta p = k \, Ec$$

Through several trials performed by changing the dimensions of the portions 16A, 16B and 16C of the flow path 16, within the values referred previously, it was seen that good frothing was achieved when the energy dissipation, or the pressure drop in the final portion of the path 16, at each change of direction, was about between 0.02 and 1 bar, preferably between 0.1 and 0.5 bar, the final frothing effect also depending on the space between two successive changes in direction.

Since each change in direction generates a localised turbulency or whirling condition, which would tend to dampen rapidly if it were not adequately maintained, rendering ineffective or substantially reducing the demixing of the $CO_2$ gas, it was seen that good nucleation conditions and pre-expansion of the mixture were obtained when the length between two successive changes in direction was between ho and 3ho.

The experimental data obtained by the trials have confirmed this hypothesis.

Below and above the values referred previously, the pressure drop at the diversions of flow of the mixture caused pre-expansion or frothing judged not to be good, due to a lack or excess respectively of the supplied kinetic energy.

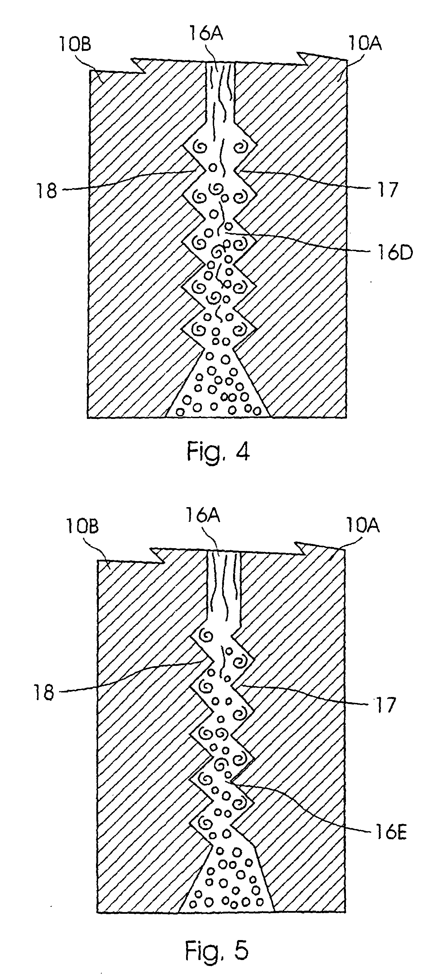

Figure 4 of the drawings shows a second embodiment for the final section of the flow path 16, designed to cause several changes in direction of the flow and a gradual generation of localised turbulency or eddies according to the present invention.

In the case of Figure 4 a final section 16D of the flow path 16 is provided with a set of fine teeth 17 and 18 on the opposite side walls, for example with teeth having triangular shape, which extend along the entire length of the bar 10.

In the case of Figure 4 the sets of teeth 17 and 18 are opposite one in relation to the other, generating a path formed by a succession of diverging and converging sections designed to create continuous diversions of the flow on both sides, with localised generations of micro turbulency or eddies.

The number of teeth 17, 18 or diverging/converging sections along the toothed portion 16D of the path 16 may vary from case to case; good results were obtained by using a number of teeth or diverging/converging portions between 1 and 5.

Figure 5 of the drawings shows an alternative embodiment as regards the arrangement of the teeth 17 and 18 on the two walls of the end portion of the path 16, compared to the embodiment of Figure 4.

Whereas in the case of Figure 4 the two sets of teeth are opposite each other, in the case of Figure 5 the set of teeth of one wall of the slot is staggered, for example by half a pitch, in relation to the set of teeth on the opposite wall so as to form a serpentine path 16E which extends in the general direction of the slot portion 16A, such as to provide repeated changes in the flow direction, and a gradual dissipation of energy caused by a sequence of a localised micro turbulency.

In both the cases of Figures 4 and 5 the sets of teeth 17 and 18 have a triangular cross-sectional shaped, with an angle at the vertex which can be between 60° and 120°, preferably between 60° and 105°. Moreover the pitch between sets of teeth must be particularly small, of an order of magnitude comparable to the minimum space existing between opposite teeth, for example equal or equivalent to 1÷4 times the minimum dimension in height of the same slot or flow path.

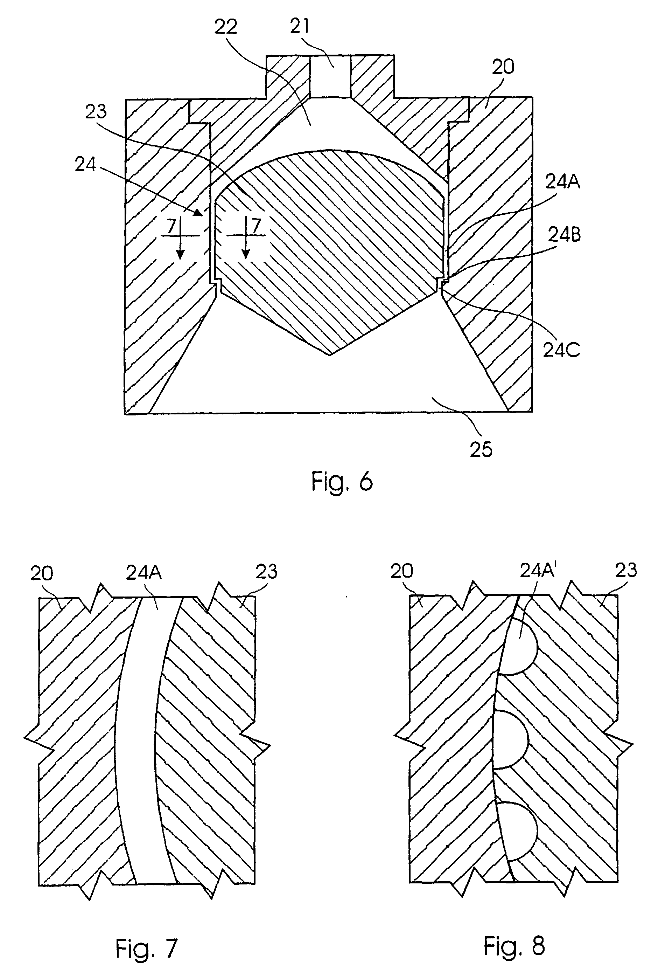

Figure 6 schematically shows a further embodiment, particularly suitable for foam dispensing devices of circular shape. In this Figure, reference 20 denotes the hollow body of the dispensing device, having an inlet 21 for the liquid polyurethane mixture which leads into a distribution chamber 22 of conical shape, which widens towards a circular flow path 24 between the outer body 20 and an internal core member 23.

As stated above, between the cylindrical core member 23 and the internal surface of the body 20 a circular path 24 is formed, for example of the type shown in Figure 3, that is comprising a first cylindrical slot 24A which extends in the flow direction of the mixture, coaxially arranged to the same device, an intermediate annular portion 24B arranged in a plane at 90° in relation to the previous one, and a third circular portion 24C at 90° in relation to the previous one, which opens towards the cavity of a diffuser 25.

In the case of Figure 6, as for the case of Figure 3, the slot 24A may also have smooth side walls, shown in Figure 7. Conversely, the first slot portion wherein laminar flow conditions are established, can be formed by a plurality of holes and/or longitudinal grooves 24A', as shown in Figure 8, which again axially extend in the flow direction and which have a length and diameter within the ranges of values referred previously.

In the case of Figure 6, as an alternative to the Z shape in the final section of the path 16, it is possible to use a toothed profile corresponding to that of Figure 4 or 5, or another suitable shape for creating localised turbulency or whirling conditions by sudden changes in the flow direction of the polyurethane mixture, to generate nucleation and frothing by the release of gaseous $CO_2$ in the same mixture which flows in the final section of the flow path 16.

Figure 9 of the drawings comparatively shows the distribution of the flow of a polyurethane mixture which travels along a narrow slot 26, having an height S1 of 0.25 mm, which leads into a cavity 27 having a front wall 28 at 3 mm from the exit of the slot 26, that is to say of an order of magnitude 12 times greater than the height S1 of the same slot 26.

The graph of Figure 9 was obtained by means of a computer simulation, using the Fluent 4.42 simulation program of FLUENT INC. Figure 9 shows, totally clearly, how the kinetic energy of the flow which leaves the slot 26 is consumed in a very short length about of the order of 1 mm, i.e. equal to 3 or 4 times the height of the slot or smaller, far from the front wall 28. This simulation confirmed that localised changes in direction of the flow, in accordance with the present invention, must preferably occur when the flow has a sufficiently high state of turbulency.

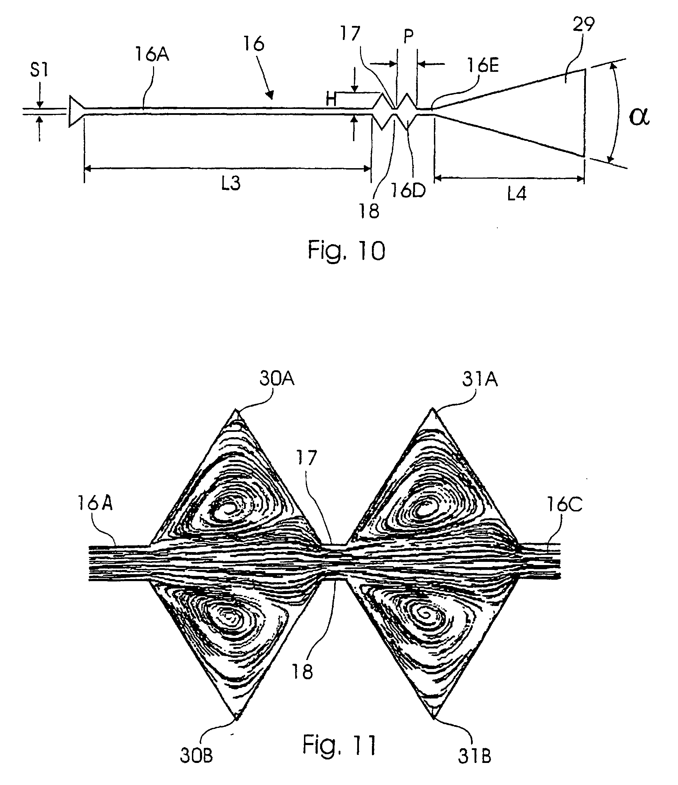

Lastly figures 10 and 11 show a further embodiment and the result obtained again with numerical computer simulation by 5.3 Fluent program, to study the behaviour of CO2 dissolved into a polyurethane mixture and the detaching of the fluid threads from the inner wall of a diverging diffuser at the changing of the angle width.

More precisely figure 10 shows a particular shape of the flow path 16 and the diverging diffuser 29; in figures 10 and 11 the same reference numbers of figure 4 have been used to indicate similar or equivalent parts.

As shown in figure 10, the device comprises a slot 16A having an height S1 of 0.3 mm, and a length L3 of 20 mm, an intermediate toothed portion 16D, and a final portion 16E opening in a diffuser 29 having a width at the angle α ranging between 12° and 30°, and a length L4 of 10 mm. The tooth have a deeps of 1.2 mm and a pitch of 1.5 mm; the tested fluid was a polyurethane mixture comprising a polyol, an isocyanate and CO2 dissolved at 4.7% on the total mass.

The polyol-isocyanate mixture had a density of 1050 $Kg/m^3$ and a viscosity of $0.05 Ns/m^2$ while CO2 had a density of 1.78 $Kg/m^3$ and a viscosity of $1.37*10^{-5}$ $Ns/m^2$; the output was of 235 1/min and the average rate in the slot, of the mixture, was of 6.50 m/s.

Along to the toothed portion 16D, as shown in figure 11, a degree of degasification and concentration of CO2 was noted in the whirling zone 30A, 30B and 31A, 31B, depending on Reynolds number; at the same time, changing the angle width of the diffuser 29 between 12° and 30° it was noted that the detachment of the fluid threads occurred for angles of 18°-22°, or above.

The computer simulation proved the good nucleation effect of the toothed portion of the pressure drop slot 16, and releasing of CO2 for starting frothing of polyurethane mixture; computer simulation proved also goods results with small angle width of the diffuser 29.

From what has been said and shown it will be clear that a process and a foam dispensing device have been provided for a polyurethane mixture which is pre-expanded or frothed by CO2 dissolved under pressure, particularly for the production of expanded polyurethane foams of both flexible and rigid type, for example by means of apparatus or systems of the continuous type. Nevertheless other possible applications of the process and of the device may be made without departing from the scope of the present invention as defined in the appended claims.

## Claims

1. A process for the production of polyurethane foams comprising the steps of:

   - mixing at least a first and a second chemically reactive components (A, B), such as a polyol and an isocyanate with carbon dioxide (CO2) under critical pressure condition to maintain the carbon dioxide dissolved into the resulting liquid mixture;
   - gradually reducing the pressure into the mixture while it is flowing at laminar condition along a first portion cf a restricted flow path (16; 24) comprising a pressure-drop slot (16A; 24A) having side walls longitudinally extending in the flow direction and dimensioned to provide a back-pressure in the upstream mixture sufficient to maintain the carbon dioxide in a dissolved state,

     **characterised by** the additional step of:

   - causing nucleation and frothing of the mixture, by generation of localised turbulences and eddies formation to gradually release gaseous carbon dioxide into the liquid mixture by successive abrupt angular diversions (16B, 16C; 16D; 16E; 24B, 24C) of the mixture while it is flowing along a remaining portion (16B, 16C; 16D; 16E; 24B, 24C) of the restricted flow-path (16; 24) consisting of an extension of the walls of the pressure-drop slot (16A; 24A).

2. Process according to claim 1, wherein localised turbulency, nucleation and frothing, are generated by successive diversions of the flowing mixture upstream the exit of the remaining portion (16C, 16E) of the flow path (16).

3. Process according to claim 1, wherein the angular diversions of the flow, are between 60° and 120°.

4. Process according to claim 3, in which the angle of diversions of the flow are preferably between 60° and 105°.

5. Process according to claim 1, wherein the localised turbulency conditions, are generated by causing the mixture to flow along a 2-shaped portion (16E) of the remaining flow path

6. Process according to claim 1, wherein the localised turbulency conditions are generated by flowing the mixture along a remaining portion (16D) of the flow path (16) provided with toothed side walls (17, 18).

7. Process according to claim 1, wherein the pressure drop in the remaining portion (16b, 16C; 16D; 16E) of the flow path (16) is comprised between 0.02 and 1 bar.

8. Prccess according to claim 7, wherein said pressure drop is preferably between 0.1 and 0.5 bar.

9. Process according to claim 1, **characterised by** the step of dividing the flow of the mixture into a plurality of single flows along said first portion (16A, 24A) of the flow path (16, 24).

10. Process according to claim 1, wherein localised turbulency and frothing are generated by making the mixture to flow along a remaining portion (16B, 16C) of the flow path having increasing heights.

11. Device for dispensing a frothed polyurethane material, in the production of polyurethane foams, according to the process of claim 1, the device comprising:

a distribution chamber (15, 22) for $CO_2$ containing polyurethane foaming mixture, opening into a pressure drop zone comprising a restricted flow path (16, 24) which extends in the direction of the flow, said flow path comprising a first flow portion provided by a pressure drop slot (16A, 24A) having side walls to gradually reduce the pressure in the flowing mixture, **characterised in that** said restricted flow path (16) comprises a second flow portion (16B; 16D; 16E; 24B) having an exit side and consisting of an extension of the side walls of the pressure-drop slot (16), said second flow portion being conformed to cause nucleation and gradual releasing of $CO_2$ by successive angular diversions in the flowing mixture, upstream said exit side.

12. Device according to claim 11, wherein the angular diversion of the flow is between 60° and 120°, preferably between 60° and 105°.

13. Device according to claim 11, wherein said second portion (16E) is defined by a Z-shaped flow path.

14. Device according to claim 11, wherein the axial length of the second portion (16B; 16D; 16E; 24B) between adjacent diversions of the flow path, is between 1 and 4 times the minimum height of the same flow path

15. Device according to claim 11, wherein said second portion (16D; 16E) of the flow path is provided with toothed side walls (17, 18)

16. Device according to claim 15, wherein the teeth (17) on one side wall are opposite to the teeth (18) on the other side wall.

17. Device according to claim 15, wherein the teeth (17) on one side wall are staggered in relation to the teeth (18) on the other side wall

18. Device according to claim 15, wherein the number of the teeth (17, 18) on each side wall is between 1 and 5.

19. Device according to claim 15, wherein the teeth (17, 18) have a cross sectional triangular shape.

20. Device according to claim 19, wherein the angle width of the teeth (17, 18) is between 60° and 120°, preferably between 60° and 105°.

21. Device according to claim 19, wherein the pitch between the teeth (17, 18) is between 1 and 4 times the minimum height of the flow path.

22. Device according to claim 11, wherein said pressure-drop slot (16A) of the flow path (16) has a linear cross-sectional shape.

23. Device according to claim 11, wherein said pressure drop slot (24A) of the flow path (24) has a circular cross-sectional shape.

24. Device according to claim 11, wherein said first portion (15A, 24A) of the flow path, comprises a plurality of axially extending holes.

**Patentansprüche**

1. Verfahren für die Produktion von Polyurethanschäumen, mit den Schritten:

    - Mischen von wenigstens einer ersten und einer zweiten chemisch reaktiven Komponente (A, B), wie etwa einem Polyol und einem Isocyanat mit Kohlendioxid ($CO_2$) unter kritischer Druckbedingung, um das Kohlendioxid in dem resultierenden flüssigen Gemisch gelöst zu halten,

    - allmähliches Reduzieren des Drucks in dem Gemisch, während es in laminarem Zustand entlang eines ersten Bereiches eines eingeschränkten Fließweges (16; 24) fließt, der einem Druckabfallschlitz (16A; 24A) aufweist, der in der Fließrichtung sich in Längsrichtung erstreckende Seitenwände hat und so dimensioniert ist, um einen Rückstaudruck auf das Gemisch stromaufwärts zu liefern, der ausreicht, um das Kohlendioxid im gelösten Zustand zu halten,

    **gekennzeichnet durch** den zusätzlichen Schritt:

    - Bewirken von Blasenkeimbildung und Aufschäumen des Gemisches, indem lokalisierte Turbulenzen und Wirbelbildungen erzeugt werden, um gasförmiges Kohlendioxid allmählich in das flüssige Gemisch freizusetzen, **durch** aufeinanderfolgende abrupte Winkelablenkungen (16B, 16C; 16D; 16E; 24B, 24C) des Gemisches, während es entlang eines verbleibenden Bereichs (16B, 16C; 16D; 16E; 24B, 24C) des eingeschränkten Fließweges (16; 24) fließt, der aus Fortsätzen der Wände des Druckabfallschlitzes (16A; 24A) besteht.

2. Verfahren nach Anspruch 1, wobei die lokalisierte Turbulenz, Blasenkeimbildung und Aufschäumen durch aufeinanderfolgende Ablenkung des fließenden Gemisches stromaufwärts des Ausgangs des verbleibenden Bereiches (16C, 16E) des Fließweges (16) erzeugt werden.

3. Verfahren nach Anspruch 1, wobei die Ablenkungen der Strömung zwischen 60° und 120° liegen.

4. Verfahren nach Anspruch 3, bei dem der Winkel der Ablenkungen der Strömung vorzugsweise zwischen 60° und 105° liegt.

5. Verfahren nach Anspruch 1, wobei die lokalisierten Turbulenzbedingungen erzeugt werden, indem das Gemisch zum Fließen entlang eines Z-förmigen Bereichs (16E) des verbleibenden Fließweges veranlasst wird.

6. Verfahren nach Anspruch 1, wobei die lokalisierten Turbulenzbedingungen erzeugt werden, indem man das Gemisch entlang eines verbleibenden Bereichs (16D) des Fließweges (16) fließen lässt, der mit gezahnten Seitenwänden (17, 18) versehen ist.

7. Verfahren nach Anspruch 1, wobei der Druckabfall in dem verbleibenden Bereich (16B, 16C; 16D; 16E) des Fließweges (16) im Bereich zwischen 0,02 und 1 bar liegt.

8. Verfahren nach Anspruch 7, wobei der Druckabfall vorzugsweise zwischen 0,1 und 0,5 bar liegt.

9. Verfahren nach Anspruch 1, **gekennzeichnet durch** den Schritt des Aufteilens des Flusses des Gemisches in eine Vielzahl von einzelnen Flüssen entlang des ersten Bereichs (16A, 24A) des Fließweges (16, 24).

10. Verfahren nach Anspruch 1, wobei lokalisierte Turbulenz und Aufschäumen erzeugt werden, indem man das Gemisch entlang eines verbleibenden Bereichs (16B, 16C) des Fließweges mit zunehmenden Höhen fließen lässt.

11. Vorrichtung zur Ausgabe von geschäumten Polyurethanmaterial bei der Herstellung von Polyurethanschäumen, gemäß dem Verfahren nach Anspruch 1, wobei die Vorrichtung aufweist:

eine Verteilungskammer (15, 22) für ein $CO_2$ enthaltendes Polyurethanschaumgemisch, die sich in eine Druckabfallzone öffnet, die einen eingeschränkten Fließweg (16, 24) hat, der sich in Fließrichtung erstreckt, wobei der Fließweg einen ersten Fließbereich aufweist, der mit einem Druckabfallschlitz (16A, 24A) versehen ist, wobei der Druckabfallschlitz Seitenwände hat, die den Druck in dem fließenden Gemisch allmählich reduzieren, **dadurch gekennzeichnet, dass** der eingeschränkte Fließweg (16) einen zweiten Fließbereich (16B; 16D; 16E; 24B) aufweist, der eine Ausgangsseite hat und aus einer Fortsetzung der Seitenwände des Druckabfallschlitzes (16) besteht, wobei der zweite Fließbereich dazu angepasst ist, Blasenkeimbildung und allmähliche Freisetzung von $CO_2$ durch aufeinanderfolgende Winkelablenkungen in dem fließenden Gemisch stromaufwärts der Ausgangsseite zu bewirken.

12. Vorrichtung nach Anspruch 11, wobei die Winkelablenkung der Strömung zwischen 60° und 120°, vorzugsweise zwischen 60° und 105° liegt.

13. Vorrichtung nach Anspruch 11, wobei der zweite Bereich (16E) durch einen Z-förmigen Fließweg definiert ist.

14. Vorrichtung nach Anspruch 11, wobei die axiale Länge des zweiten Bereichs (16B; 16D; 16E; 24B) zwischen aufeinanderfolgenden Ablenkungen des Fließweges zwischen einmal und viermal der minimalen Höhe des Fließweges liegt.

15. Vorrichtung nach Anspruch 11, wobei der zweite Bereich (16D; 16E) des Fließweges mit gezahnten Seitenwänden (17, 18) versehen ist.

16. Vorrichtung nach Anspruch 15, wobei die Zähne (17) an einer Seitenwand gegenüber den Zähnen (18) an der anderen Seitenwand liegen.

17. Vorrichtung nach Anspruch 15, wobei die Zähne (17) auf der einen Seitenwand versetzt gegenüber den Zähnen (18) an der anderen Seitenwand sind.

18. Vorrichtung nach Anspruch 15, wobei die Anzahl der Zähne (17, 18) an jeder Seitenwand zwischen 1 und 5 liegt.

19. Vorrichtung nach Anspruch 15, wobei die Zähne (17, 18) im Querschnitt eine dreieckige Form haben.

20. Vorrichtung nach Anspruch 19, wobei die Winkelweite der Zähne (17, 18) zwischen 60° und 120°, vorzugsweise zwischen 60° und 105° liegt.

21. Vorrichtung nach Anspruch 19, wobei der Abstand zwischen den Zähnen (17, 18) zwischen einmal und viermal der minimalen Höhe des Fließweges liegt.

22. Vorrichtung nach Anspruch 11, wobei der Druckabfallschlitze (16A) des Fließweges (16) eine geradlinige Querschnittsform hat.

23. Vorrichtung nach Anspruch 11, wobei der Druckabfallschlitz (24A) des Fließweges (24) eine kreisförmige Querschnittsform hat.

24. Vorrichtung nach Anspruch 11, wobei der erste Bereich (16A, 24A) des Fließweges eine Mehrzahl von axial verlaufenden Löchern aufweist.

**Revendications**

1. Un procédé de fabrication de mousses de polyuréthane comprenant les étapes de :

   - mélange d'au moins un premier et un deuxième composants réactifs chimiquement (A, B), comme un polyol et un isocyanate avec du dioxyde de carbone ($CO_2$) sous une condition critique de pression pour maintenir le dioxyde de carbone dissous dans le mélange de liquide résultant ;
   - réduction graduelle de la pression dans le mélange tandis qu'il s'écoule sous une condition laminaire le long d'une première partie d'un trajet d'écoulement limité (16 ; 24), comprenant une fente de chute de pression (16A ; 24A) ayant des parois latérales se prolongeant longitudinalement dans la direction d'écoulement et dimensionnées pour fournir une contre-pression dans le mélange amont suffisante pour maintenir le dioxyde de carbone dans un état dissous,

**caractérisé par** l'étape supplémentaire de :

- provocation de la nucléation et du moussage par battage du mélange, en générant des turbulences localisées et la formation de remous pour libérer graduellement le dioxyde de carbone gazeux dans le mélange liquide au moyen de déviations angulaires abruptes successives (16B, 16C ; 16D, 16E ; 24B, 24C) du mélange tandis qu'il s'écoule le long d'une partie restante (16B, 16C ; 16D, 16E ; 24B, 24C) du trajet d'écoulement limité (16 ; 24) consistant en un prolongement des parois de la fente de chute de pression (16A ; 24A).

2. Procédé selon la revendication 1, dans lequel la turbulence localisée, la nucléation et le moussage par battage sont générés par des déviations successives du mélange s'écoulant en amont de la sortie de la partie restante (16C, 16E) du trajet d'écoulement (16).

3. Procédé selon la revendication 1, dans lequel les déviations angulaires de l'écoulement se situent entre $60°$ et $120°$.

4. Procédé selon la revendication 3, dans lequel l'angle des déviations de l'écoulement se situe de préférence entre $60°$ et $105°$.

5. Procédé selon la revendication 1, dans lequel les conditions de turbulence localisée sont générées en provoquant que le mélange s'écoule le long d'une partie en forme de Z (16E) du trajet d'écoulement restant.

6. Procédé selon la revendication 1, dans lequel les conditions de turbulence localisée sont générées par l'écoulement du mélange le long d'une partie restante (16D) du trajet d'écoulement (16) fourni par les parois latérales dentées (17, 18).

7. Procédé selon la revendication 1, dans lequel la chute de pression dans la partie restante (16B, 16C ; 16D, 16E) du trajet d'écoulement (16) se situe entre 0,02 et 1 bar.

8. Procédé selon la revendication 7, dans lequel ladite chute de pression se situe de préférence entre 0,1 et 0,5 bar.

9. Procédé selon la revendication 1, **caractérisé par** l'étape de division de l'écoulement du mélange en une pluralité d'écoulements uniques le long de ladite première partie (16A, 24A) du trajet d'écoulement (16, 24).

10. Procédé selon la revendication 1, dans lequel la turbulence localisée et le moussage par battage sont générés en faisant que le mélange s'écoule le long d'une partie restante (16B, 16C) du trajet d'écoulement ayant des hauteurs accrues.

11. Dispositif pour distribuer un matériau de polyuréthane en mousse cellulaire dans la fabrication de mousses de polyuréthane, selon le procédé de la revendication 1, le dispositif comprenant :

une chambre de distribution (15, 22) pour le mélange de mousse de polyuréthane contenant du $CO_2$, une ouverture dans la zone de chute de pression comprenant un trajet d'écoulement limité (16, 24) qui se prolonge dans la direction de l'écoulement, ledit trajet d'écoulement comprenant une première partie d'écoulement fournie par une fente de chute de pression (16A, 24A) ayant des parois latérales pour réduire graduellement la pression dans le mélange s'écoulant, **caractérisé en ce que** ledit trajet d'écoulement limité (16) comprend une deuxième partie d'écoulement (16B ; 16D ; 16E ; 24B) ayant un côté de sortie et consistant en un prolongement des parois latérales de la fente à chute de pression (16), ladite deuxième partie d'écoulement étant conformée pour provoquer une nucléation et une libération graduelle du $CO_2$ par déviations angulaires successives dans le mélange s'écoulant, en amont dudit côté de sortie.

12. Dispositif selon la revendication 11, dans lequel la déviation angulaire de l'écoulement se situe entre $60°$ et $120°$, de préférence entre $60°$ et $105°$.

13. Dispositif selon la revendication 11, dans lequel ladite deuxième partie (18E) est définie par un trajet d'écoulement en forme de Z.

**14.** Dispositif selon la revendication 11, dans lequel la longueur axiale de la deuxième partie (16B ; 16D ; 16E ; 24B) entre les déviations adjacentes du trajet d'écoulement, se situe entre 1 et 4 fois la hauteur minimale du même trajet d'écoulement.

**15.** Dispositif selon la revendication 11, dans lequel ladite deuxième partie (16D ; 16E) du trajet d'écoulement est munie de parois latérales dentées (17, 18).

**16.** Dispositif selon la revendication 15, dans lequel les dents (17) sur une paroi latérale sont opposées aux dents (18) sur l'autre paroi latérale.

**17.** Dispositif selon la revendication 15, dans lequel les dents (17) sur une paroi latérale sont échelonnées par rapport aux dents (18) sur l'autre paroi latérale.

**18.** Dispositif selon la revendication 15, dans lequel le nombre de dents (17, 18) sur chaque paroi latérale se situe entre 1 et 5.

**19.** Dispositif selon la revendication 15, dans lequel les dents (17, 18) ont une forme triangulaire en coupe transversale.

**20.** Dispositif selon la revendication 19, dans lequel la largeur d'angle des dents (17, 18) se situe entre 60° et 120°, de préférence entre 60° et 105°.

**21.** Dispositif selon la revendication 19, dans lequel le pas entre les dents (17, 18) se situe entre 1 et 4 fois la hauteur minimale du trajet d'écoulement.

**22.** Dispositif selon la revendication 11, dans lequel ladite fente de chute de pression (16A) du trajet d'écoulement (16) présente une forme en section transversale linéaire.

**23.** Dispositif selon la revendication 11, dans lequel ladite fente de chute de pression (24A) du trajet d'écoulement (24) présente une forme en section transversale circulaire.

**24.** Dispositif selon la revendication 11, dans lequel ladite première partie (16A, 24A) du trajet d'écoulement comprend une pluralité de trous se prolongeant axialement.

Fig. 1

10

10B

10A

15

16A

L1

16

16'

Fig. 2

10B

S1

16A

16B

10A

S2

L2

S3

16C

16'

Fig. 3

10B   16A   10A

18   17

16D

Fig. 4

10B   16A   10A

18   17

16E

Fig. 5

Fig. 6

Fig. 7

Fig. 8

Fig. 9

Fig. 10

Fig. 11